# EUROPÄISCHE PATENTSCHRIFT

(11) **EP 1 710 101 B1**
(45) Veröffentlichungstag und Bekanntmachung des Hinweises auf die Patenterteilung: **25.05.2011**
(21) Anmeldenummer: 06004102.7
(22) Anmeldetag: 01.03.2006
(51) Int. Cl.: B60G 15/06

(54) **Verfahren zur Herstellung eines Federtellers**
Process for manufacturing a spring plate
Procédé de fabrication d'une coupelle de ressort

(30) Priorität: 06.04.2005 DE 102005015630
(43) Veröffentlichungstag der Anmeldung: 11.10.2006
(73) Patentinhaber: Dr. Ing. h.c. F. Porsche AG, 70435 Stuttgart (DE)
(72) Erfinder: Von Tardy-Tuch, Georg, 71272 Malmsheim (DE)

(56) Entgegenhaltungen:
- EP-A- 1 002 675
- EP-A- 1 431 082
- DE-A1- 19 808 021
- US-A- 4 482 135
- PATENT ABSTRACTS OF JAPAN Bd. 2003, Nr. 11, 5. November 2003 (2003-11-05) & JP 2003 205722 A (AOKI MASAAKI), 22. Juli 2003 (2003-07-22)

## Beschreibung

Die Erfindung betrifft ein Verfahren zur Herstellung eines Federtellers für ein Federbein eines Fahrzeugs gemäß dem Oberbegriff des Anspruches 1.

Ein Federteller wird insbesondere als Verbindungselement zwischen einem Dämpfer und einer Feder bei einem Federbein verwendet. Hierbei ist der Federteller häufig aus Bauraumgründen als fast ebenes Gebilde ausgebildet, wobei er die von der Feder einwirkende Kraft normal zur Kraftrichtung versetzt, was zu ungünstigen Kraftflusswegen und somit zu einer ungünstigen Belastung des Bauteils (Biegebelastung) führt.

Die DE 198 08 021 A1 offenbart ein Federbein mit einem verbundenen Federteller, an dem sich eine Spiralfeder abstützt, die über einen weiteren oberen Federteller zum Fahrzeugaufbau hin verbunden ist. Hierbei umfasst der Federteller im Wesentlichen ein topfförmiges Aufnahmeteil, zu welchem exzentrisch eine ringförmige Federwindungsauflage angeordnet ist. Diese ist über mehrere radiale Rippen mit dem topfförmigen Aufnahmeteil verbunden. Die Rippen erstrecken sich sternförmig vom Aufnahmeteil weg und sind entsprechend der aufzunehmenden Belastung mit einer unterschiedlichen Breite ausgebildet. Sie sind etwa U-profilförmig ausgebildet und bilden zwischen sich Freiräume. Hierbei handelt es sich um einen gegossenen Federteller, insbesondere aus Aluminium-Druckguss.

Aus der DE 43 35 329 A1 ist ein Verfahren zur Herstellung einer gerollten Buchse aus einer ebenen Buchsenplatine, die an einer ersten Stirnfläche einen zapfenförmigen Vorsprung aufweist, der im gerollten Zustand in eine Ausnehmung einer zweiten Stirnfläche eingreift, bekannt, wobei die Formgebung des Vorsprungs und der Ausnehmung derart aufeinander abgestimmt ist, dass eine verschnittfreie Herstellung der Buchsenplatine möglich ist. Hierbei wird während des Verrollvorgangs eine Passung zwischen dem Vorsprung und der Ausnehmung hergestellt, die auf einer im Wesentlichen radialen Umformung bezogen auf die Buchsenlängsachse des Vorsprunges und der Ausnehmung beruht.

Die DE 79 22 720 U1 offenbart ein Schutzrohr für einen Stoßdämpfer, wobei die Schutzrohrdeckfläche und Schutzrohrmantelfläche einstückig aus einem Flachmaterial ausgestanzt und anschließend zu einem zylindrischen Schutzrohr zusammengerollt werden. Hierbei kann die Schutzrohrmantelfläche mit einer Schwalbenschwanzhalterung versehen und zusammengehalten oder durch eine Schweißnaht verbunden sein. Aus der EP-A-1 431 082 ist ein Federteller für ein Federbein eines Fahrzeugs bekannt, der als Blechformteil mit im Wesentlichen konstanter Wanddicke ausgebildet ist und durch Stanzpressen hergestellt wird.

Alternativ zum zuvor genannten Druckgießen ist die Herstellung von Federtellern mittels Tiefziehen bekannt. Hierbei lassen sich jedoch nur bestimmte Geometrien auf Grund der Wandstärkeabnahme realisieren. Bei einem Federteller ergibt sich hierbei ein Problem im Bereich der Anbindung an den Dämpfer, da dieser Bereich am höchsten belastet ist, so dass der Federteller in den anderen Bereichen überdimensioniert sein muss, um im Bereich der Anbindung eine ausreichende Festigkeit aufzuweisen.

Es ist Aufgabe der vorliegenden Erfindung, ein eingangs genanntes Verfahren zu verbessern. Diese Aufgabe wird durch ein Verfahren mit den Merkmalen des Anspruches 1 gelöst. Vorteilhafte Ausführungen sind Gegenstand der Unteransprüche.

Erfindungsgemäß wird zuerst ein Blechzuschnitt hergestellt, welcher der planen Abwicklung des Federtellers entspricht, anschließend wird dieser Blechzuschnitt in einer Presse formgeschmiedet, daraufhin erfolgt ein Aufrollen und anschließend werden die zu verbindenden Enden miteinander verbunden. Alternativ kann das Formschmieden auch nach dem Aufrollen erfolgen, jedoch ist das Aufrollen vor dem Formschmieden bevorzugt. Besonders vorteilhaft bei diesem Herstellungsverfahren sind relativ gleichbleibende Blechstärken und geringe Umformkosten. Im Gegensatz zum Tiefziehen ist keine Überdimensionierung in geringer belasteten Bereichen erforderlich, so dass auch Material eingespart werden kann, woraus sich eine Gewichtsreduzierung ergibt. Zudem lassen sich die Kraftflusswege in Folge verbesserter Möglichkeiten der Formgestaltung optimieren.

Das miteinander Verbinden der Enden erfolgt bevorzugt mittels Nieten, Schweißen, Bördeln oder - bei geeignete Materialauswahl - Kleben, jedoch können auch andere Fügeverfahren (insbesondere material- oder formschlüssig) verwendet werden, sofern die Verbindung ausreichend sicher bei den zu erwartenden Belastungen ist.

Im Folgenden ist die Erfindung anhand eines in der Zeichnung dargestellten Ausführungsbeispiels näher erläutert. Es zeigen
- Fig. 1: eine Ansicht eines Federbeins mit Federteller,
- Fig. 2: eine Ansicht des Federtellers nach dem ersten Herstellungsschritt, und
- Fig. 3: eine Ansicht des Federtellers nach dem zweiten Herstellungsschritt.

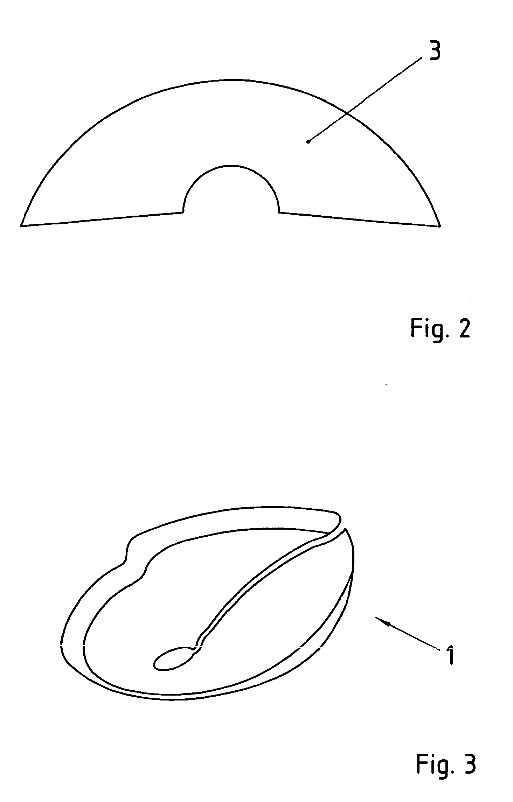

Ein Federteller 1, wie er bei einem Federbein 2 für ein Kraftfahrzeug verwendet wird, wird folgendermaßen hergestellt: Aus einem Blech wird ein Blechzuschnitt 3 im Wesentlichen in Form einer Abwicklung des fertigen Federtellers ausgestanzt (vgl. Fig. 2). Dieser Blechzuschnitt 3 wird aufgerollt und anschließend in einer Presse formgeschmiedet (vgl. Fig. 3), wobei die Enden des Blechzuschnitts 3 noch nicht miteinander verbunden sind, jedoch derart benachbart zueinander angeordnet sind, dass die Positionierung der Enden zueinander zur Vorbereitung des abschließenden Schritts ohne großen Aufwand möglich ist. Anschließend werden im letzten Schritt die Enden miteinander verbunden, vorliegend mittels Schweißens.

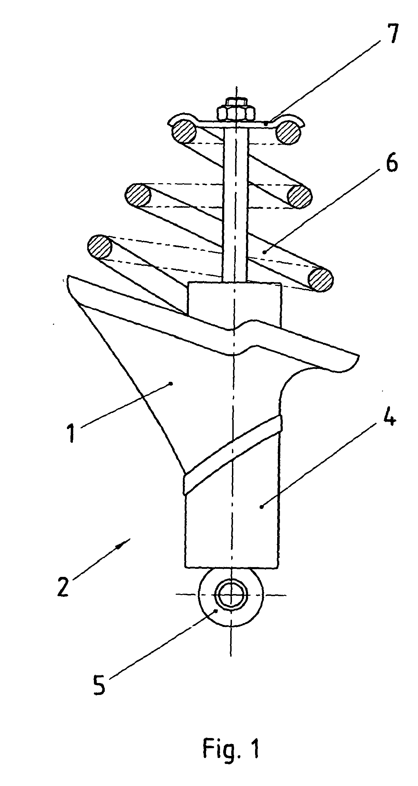

Ein derartig hergestellter Federteller 1 ist in Fig. 1 zur Verdeutlichung des Aufbaus eines Federbeins 2 dargestellt. Hierbei ist im und durch den Federteller 1 ragend ein Dämpfer 4 mit hieran angebrachter Öse 5 zur Radträgeranbringung vorgesehen. In den Federteller 1 ragt eine vorgespannte Druckfeder 6, die Teil des Dämpfers 4 ist, ragt nach oben über den Federteller 1 hinaus, wobei innerhalb der Druckfeder 6 ein Bolzen angeordnet ist, an dessen oberen Ende eine obere Federanlage 7 befestigt ist, die im eingebauten Zustand an der Fahrzeug-Karosserie befestigt ist.

Wie aus den Figuren 1 und 3 ersichtlich ist, weist der Federteller 1 eine annähernd kegelförmige Gestalt mit relativ großem Öffnungswinkel auf, wobei das federseitige Ende relativ flach ausgebildet und mit einem sich etwa in axialer Richtung, also in Fig. 1 nach oben erstreckend verlaufenden Rand versehen ist. Der Federteller 1 hierbei ist jedoch asymmetrisch, unter anderem angepasst an die Federwicklung ausgebildet, wobei die miteinander verbundenen Enden in einem relativ gerade verlaufenden Bereich (in Fig. 1 links dargestellt) angeordnet sind. Die unterschiedlichen Abmessungen lassen sich am besten der Fig. 2 entnehmen.

Die Krafteinleitung von der Feder 6 in den Federteller 1 erfolgt in dem relativ flach ausgebildeten, in Fig. 1 oben dargestellten Bereich, die Kraftausleitung in den Dämpfer 4 erfolgt im in Fig. 1 unten dargestellten Bereich.

### Bezugszeichenliste

- 1: Federteller
- 2: Federbein
- 3: Blechzuschnitt
- 4: Dämpfer
- 5: Öse
- 6: Druckfeder
- 7: obere Federanlage

## Patentansprüche

1. Verfahren zur Herstellung eines Federtellers (1) für ein Federbein (2) eines Fahrzeuges, **dadurch gekennzeichnet, dass** zuerst ein Blechzuschnitt (3) hergestellt wird, welcher der planen Abwicklung des Federtellers (1) entspricht, anschließend dieser Blechzuschnitt (3) formgeschmiedet wird, daraufhin ein Aufrollen erfolgt und anschließend die zu verbindenden Enden miteinander verbunden werden.

2. Verfahren zur Herstellung eines Federtellers (1) für ein Federbein (2) eines Fahrzeuges, **dadurch gekennzeichnet, dass** zuerst ein Blechzuschnitt (3) hergestellt wird, welcher der planen Abwicklung des Federtellers (1) entspricht, anschließend dieser Blechzuschnitt (3) gerollt wird, daraufhin ein Formschmieden erfolgt und anschließend die zu verbindenden Enden miteinander verbunden werden.

3. Verfahren nach Anspruch 1 oder 2, **dadurch gekennzeichnet, dass** das miteinander Verbinden der Enden mittels Nieten, Bördeln, Schweißen oder Kleben erfolgt.

4. Verfahren nach einem der vorhergehenden Ansprüche, **dadurch gekennzeichnet, dass** das Verbinden formschlüssig erfolgt.

## Claims

1. Method for manufacturing a spring plate (1) for a spring strut (2) of a vehicle, **characterized in that** firstly a sheet-metal blank (3) is manufactured which corresponds to the planar developed form of the spring plate (1), said sheet-metal blank (3) is subsequently precision-forged, rolling-up is thereupon carried out, and subsequently the ends to be connected are connected to one another.

2. Method for manufacturing a spring plate (1) for a spring strut (2) of a vehicle, **characterized in that** firstly a sheet-metal blank (3) is manufactured which corresponds to the planar developed form of the spring plate (1), said sheet-metal blank (3) is subsequently rolled, precision forging is thereupon carried out, and subsequently the ends to be connected are connected to one another.

3. Method according to Claim 1 or 2, **characterized in that** the connection of the ends to one another takes place by means of riveting, crimping, welding or adhesive bonding.

4. Method according to one of the preceding claims, **characterized in that** the connection takes place in a positively locking manner.

## Revendications

1. Procédé de fabrication d'une coupelle de ressort (1) pour une jambe de suspension (2) d'un véhicule, **caractérisé en ce que** l'on fabrique d'abord une découpe en tôle (3) qui correspond au développement en plan de la coupelle de ressort (1), puis cette découpe en tôle (3) est estampée, puis enroulée, et finalement les extrémités à raccorder sont raccordées l'une à l'autre.

2. Procédé de fabrication d'une coupelle de ressort (1) pour une jambe de suspension (2) d'un véhicule, **caractérisé en ce que** l'on fabrique d'abord une découpe en tôle (3) qui correspond au développement en plan de la coupelle de ressort (1), puis cette découpe en tôle (3) est enroulée, puis l'on effectue un estampage, et finalement les extrémités à raccorder sont raccordées l'une à l'autre.

3. Procédé selon la revendication 1 ou 2, **caractérisé en ce que** le raccordement des extrémités l'une à l'autre s'effectue par rivetage, bordage, soudage ou collage.

4. Procédé selon l'une quelconque des revendications précédentes, **caractérisé en ce que** le raccordement s'effectue par engagement par correspondance géométrique.
